# DEMANDE DE BREVET EUROPEEN

(11) **EP 4 458 497 A1**
(43) Date de publication de la demande: **06.11.2024**
(21) Numéro de dépôt: 23171496.5
(22) Date de dépôt: 04.05.2023
(51) Int. Cl.: B23B 1/00, B23B 5/48, B23B 29/12, F04D 17/12, F04D 29/02, F04D 29/057, F16C 17/02, F16C 17/04, F16C 17/10, F16C 33/10, F16C 33/14, G05B 19/18

(54) **PROCÉDÉ D'USINAGE DE NERVURES OU RAINURES DE PALIERS À AIR OU A GAZ D'UNE PIÈCE À ARBRE DE ROTATION D'UN COMPRESSEUR, ET D'ASSEMBLAGE DES COMPOSANTS DE LA PIÈCE**

(71) Demandeur: Belenos Clean Power Holding AG, 2502 Bienne (CH)
(72) Inventeur: GASHI, Rexhep, 1762 Givisiez (CH); CHOBAUT, Nicolas, 2503 Bienne (CH); WAGNER, Patrick, 3014 Berne (CH); PELLERIN, Vincent, 2843 Châtillon (CH)
(74) Mandataire: ICB SA

(57) **Abrégé**

L'invention se rapporte à un procédé d'usinage de nervures ou rainures sur une pièce comprenant un arbre (7) et un palier axial à air ou à gaz (24) fixé sur l'arbre ou faisant partie de l'arbre. La pièce est mise en rotation autour d'un axe longitudinal d'un compresseur centrifuge. Selon le procédé, toutes les nervures ou rainures (24a) sont obtenues sur une portion à usiner de la pièce entraînée en rotation, par déplacement de la pièce ou du porte-outil dans une direction longitudinale d'usinage, en une fois par l'outil d'usinage effectuant des mouvements de va-et-vient avec une position d'usinage en contact avec la pièce et une position sans contact avec la pièce du début à la fin de la portion à usiner de la pièce. Les mouvements de va-et-vient de l'outil d'usinage sont synchronisés à la programmation sinusoïdale effectuée dans la machine d'usinage, ainsi qu'à l'agencement désiré et programmé des nervures ou rainures à réaliser sur la portion de la pièce.

## Description

### Domaine de l'invention

L'invention se rapporte à un procédé d'usinage de nervures ou rainures de paliers à air ou à gaz d'une pièce à arbre de rotation d'un compresseur centrifuge de fluide à haute vitesse, et d'assemblage des composants de la pièce. Le compresseur est à deux étages, et comprend un carter avec une entrée de fluide et une sortie de fluide comprimé et renferme un arbre monté en rotation autour d'un axe longitudinal. Une première roue de compression et une seconde roue de compression sont montées dos à dos sur l'arbre, la première roue de compression constituant un premier étage de compression et la seconde roue de compression constituant un second étage de compression. Le compresseur centrifuge comprend encore un moteur, de préférence électrique synchrone, positionné entre la première roue de compression et la seconde roue de compression et agencé pour mettre en rotation l'arbre. Au moins un palier axial à air ou à gaz est monté à une extrémité de l'arbre, et un palier radial avant à air ou à gaz est monté sur une première extrémité de l'arbre et un palier radial arrière à air ou à gaz est monté sur une seconde extrémité de l'arbre.

L'invention concerne également la pièce obtenue par le procédé d'usinage, et/ou d'assemblage des composants de la pièce.

### Arrière-plan de l'invention

Des compresseurs de fluide sont généralement appelés des turbocompresseurs ou compresseurs centrifuges. Ils comprennent un stator et un rotor formant un moteur synchrone à aimant permanent (moteur brushless). Ils peuvent atteindre de très hautes vitesses, telles que 100 000 à 500 000 tours/minute. Le moteur entraîne les roues de compression à régime élevé, où les roues de compression compriment le fluide. Le fluide peut être de l'air, un gaz, un réfrigérant ou tout autre fluide approprié. L'utilisation de deux roues de compression permet de comprimer le fluide deux fois plus.

Ces compresseurs peuvent être utilisés par exemple dans un système CVCA (chauffage, ventilation, climatisation et conditionnement d'air) mobile avec un gaz frigorigène comme dans les véhicules électriques, hybrides ou à hydrogène. Ces compresseurs peuvent également être utilisés dans un système immobile avec un gaz frigorigène comme une pompe à chaleur.

Ces compresseurs comprennent généralement un premier circuit pour la circulation du fluide à comprimer et un second circuit pour la circulation d'un liquide de refroidissement utilisé pour refroidir le compresseur, et plus particulièrement le moteur et les paliers à air ou à gaz supportant l'arbre du moteur d'une part et les composants électroniques d'autre part. En effet, la rotation à vitesse élevée du moteur entraîne un échauffement très important, de sorte que les éléments du compresseur doivent être refroidis pour ne pas être endommagés. Ces circuits sont généralement prévus à l'intérieur du compresseur en tant que tel, au moins en ce qui concerne le circuit de refroidissement. Rien n'est prévu pour faciliter l'écoulement de l'air ou le gaz de refroidissement lors du fonctionnement du compresseur notamment à haute vitesse, ce qui constitue un inconvénient. De plus, les paliers à air ou à gaz supportant l'arbre rotor ne sont pas conçus pour supporter l'arbre rotor sans frottement, ce qui génère un échauffement important lorsque le rotor tourne à haute vitesse ce qui constitue un autre inconvénient.

De plus, il est connu de réaliser des rainures ou des nervures au niveau des paliers à air ou à gaz pour un écoulement de l'air ou de gaz, et permettre la création d'une pression et d'un refroidissement. Cependant, les rainures sont réalisées sans agencement particulier par un usinage laser, ce qui constitue un inconvénient, car le temps d'usinage est trop long et ainsi les coûts sont trop élevés.

### Résumé de l'invention

L'invention a notamment pour objectif de pallier les différents inconvénients mentionnés ci-dessus par un procédé pour réaliser rapidement des rainures ou des nervures sur un arbre de rotor d'une pièce au niveau de chaque palier radial à air ou à gaz, et sur un palier axial à air ou à gaz fixé à l'arbre ou faisant partie de l'arbre. Lesdites rainures sur l'arbre sont agencées de telle manière à vaincre la gravité lorsque l'arbre du compresseur tourne à haute vitesse dans chaque palier et pour permettre d'avoir l'arbre rotor en rotation maintenu sans contact mécanique sur un filet d'air ou de gaz dans les paliers radiaux donc pratiquement sans frottement.

A cet effet, la présente invention concerne un procédé d'usinage de nervures ou rainures de paliers à air ou à gaz d'une pièce à arbre de rotation d'un compresseur de fluide à haute vitesse, qui comprend les caractéristiques de la revendication indépendante 1.

Des étapes particulières du procédé sont définies dans les revendications dépendantes 2 à 8.

A cet effet, la présente invention concerne également un procédé d'usinage de nervures ou rainures sur une pièce à arbre de rotation et d'assemblage des composants de la pièce selon les revendications indépendantes 9 et 10.

A cet effet, la présente invention concerne également une pièce destinée à être mise en rotation autour d'un axe longitudinal d'un compresseur centrifuge et destinée à avoir des nervures ou des rainures usinées selon le procédé d'usinage, et définie dans la revendication indépendante 11.

Des formes d'exécution de la pièce sont définies dans les revendications dépendantes 12 à 15.

Un avantage du procédé d'usinage des nervures ou rainures sur une pièce à arbre de rotation à usiner du compresseur dans une machine d'usinage, réside dans le fait que toutes les nervures ou rainures sont obtenues sur une portion à usiner de la pièce entraînée en rotation, en une fois par un outil d'usinage effectuant des mouvements de va-et-vient du début à la fin de la portion à usiner de la pièce à arbre de rotation. Pour ce faire, les mouvements de va-et-vient de l'outil d'usinage sont synchronisés à la programmation sinusoïdale effectuée dans la machine d'usinage, ainsi qu'à l'agencement désiré des nervures ou rainures à réaliser sur la portion de la pièce.

Durant l'usinage de la pièce à arbre de rotation, la pièce ou le porte-outil portant l'outil d'usinage est également déplacé dans une direction longitudinale d'usinage pendant que l'outil d'usinage effectue les mouvements de va-et-vient.

Les mouvements de va-et-vient de l'outil sont comparés à un oscillateur piézoélectrique où la fréquence d'oscillation peut être modifiée pour accélérer ou ralentir les mouvements de va-et-vient de l'outil selon la programmation effectuée dans la machine d'usinage pour obtenir lesdites nervures ou rainures désirées. Dans les mouvements de va-et-vient, l'outil est une fois en position d'usinage en contact avec la pièce et une autre fois sans contact avec la pièce.

La pièce à usiner comprend principalement un arbre fixé à une structure rotor d'un moteur électrique l'entraînant en rotation, ou au moins un palier axial à air ou à gaz monté à une première extrémité de l'arbre ou faisant partie de l'arbre entre une roue de compression et un palier radial à air ou à gaz. Des nervures ou rainures peuvent être réalisées sur une face ou de préférence sur deux faces du disque du palier axial à air ou à gaz. Alternativement, celles-ci peuvent être réalisées sur une face des paliers axiaux statiques faisant face au disque axial.

Un avantage du procédé d'usinage des nervures ou rainures dans une machine d'usinage, réside dans le fait que les nervures ou rainures sont réalisées très rapidement en moins de 1 minute sur chaque portion à usiner de l'arbre pour les paliers radiaux à air ou à gaz et avec grande précision. Il en est de même pour les rainures ou nervures réalisées sur une ou deux faces du disque du palier axial à air ou à gaz entraîné en rotation. L'outil d'usinage est de plus grande dureté que le matériau de l'arbre ou du palier axial à air ou à gaz.

Comme expliqué ci-dessus, la machine d'usinage peut être programmée pour avoir une synchronisation simultanée de tournage avec l'outil d'usinage selon une programmation sinusoïdale pour obtenir un agencement des nervures ou rainures sur chaque portion à usiner de l'arbre pour chaque palier radial à air ou à gaz, et pour le palier axial à air ou à gaz.

Suite à un tel usinage des nervures ou rainures, qui sont de préférence en forme de V avec un changement d'orientation de chaque nervure ou rainure au centre de chaque portion usinée sur l'arbre, cela permet de maintenir sans contact mécanique l'arbre mis en rotation à haute vitesse dans le compresseur dans les paliers radiaux à air ou à gaz. Donc l'arbre est maintenu dans chaque palier radial pratiquement sans frottement par la pression de l'air ou de gaz passant dans les rainures ou nervures suite à la rotation à haute vitesse de l'arbre. Déjà à partir de 6000 tours/min, la pression d'air ou de gaz dans chaque palier radial aérodynamique est telle que l'arbre n'est plus en contact mécanique avec le palier radial statique évitant de ce fait tout frottement mécanique. Bien entendu plus l'arbre tourne vite, et plus la pression d'air est forte dans le palier radial, ce qui génère automatiquement un frottement d'air ou de gaz plus important.

Les rainures ou nervures sont usinées par la machine d'usinage et l'outil d'usinage selon une programmation sinusoïdale et l'agencement désiré des rainures ou nervures de telle manière à avoir une inversion d'orientation des rainures ou nervures sur l'arbre pratiquement vers la moitié intérieure de chaque palier radial statique placé au-dessus desdites nervures. Cela permet de générer une pression d'air ou de gaz qui peut être de plus en plus importante plus l'arbre tourne vite.

Un tel compresseur centrifuge de fluide à haute vitesse peut tourner à très haute vitesse sans un échauffement excessif grâce à la réalisation des nervures ou rainures dans les paliers radiaux à air ou à gaz.

Un palier axial est également prévu entre la première roue de compression et le premier palier radial. Des rainures ou nervures sont pratiquées en périphérie sous forme de spirales sur une face avant et une face arrière du disque du palier axial. Des films d'air sont générés par les rainures à la rotation de l'arbre pour maintenir l'axe dans une position bien centrée longitudinalement.

### Brève description des dessins

Les buts, avantages et caractéristiques de la présente invention apparaîtront plus clairement dans la description détaillée suivante d'une forme de réalisation de l'invention donnée uniquement à titre d'exemple non limitatif et illustrée par les dessins annexés sur lesquels :
- la figure 1 représente une vue en coupe longitudinale selon l'axe A-A d'un compresseur centrifuge à haute vitesse selon l'invention,
- les figures 2a et 2b représentent une vue en coupe longitudinale selon l'axe A-A de l'arbre avec les roues de compression, les paliers aérodynamiques axial et radiaux et la structure rotor à un ou plusieurs aimants permanents selon l'invention, et une vue en plan du côté de la première roue de compression et le palier axial selon l'invention,
- la figure 3 représente un graphique de la différence entre un déplacement radial de la surface extérieure de l'arbre et celui de la surface intérieure de l'aimant permanent ou des aimants permanents selon l'invention,
- la figure 4 représente une vue tridimensionnelle de l'ensemble des figures 2a et 2b montrant les rainures ou nervures dans chaque palier radial statique montré en élévation au-dessus de l'arbre selon l'invention,
- la figure 5 représente une première variante d'une vue en coupe longitudinale selon l'axe A-A de l'arbre avec les roues de compression, au moins le palier axial monobloc avec l'arbre et la structure rotor à un ou plusieurs aimants permanents selon l'invention disposée à l'intérieur de l'arbre,
- la figure 6 représente une seconde variante d'une vue en coupe longitudinale selon l'axe A-A de l'arbre avec les roues de compression, au moins le palier axial monobloc avec l'arbre et la structure rotor à un ou plusieurs aimants permanents selon l'invention disposée à l'intérieur de l'arbre,
- la figure 7 est une vue en plan du palier axial à air ou à gaz,
- la figure 8 est une vue des nervures ou rainures disposées à une extrémité de l'arbre sur lequel est disposé le palier radial statique montré en coupe longitudinale selon l'invention,
- la figure 9 est une vue de l'arbre avec des rainures ou nervures disposées aux deux extrémités de l'arbre et sur lesquelles sont disposés respectivement les paliers radiaux statiques à air ou à gaz selon l'invention,
- la figure 10 est une vue générale d'une machine d'usinage pour l'usinage des rainures ou nervures sur l'arbre du compresseur centrifuge selon l'invention,
- la figure 11 est un graphique d'une nervure de précision réalisée sur l'arbre pour les paliers radiaux à air ou à gaz selon l'invention, et
- La figure 12 est une vue tridimensionnelle générale d'une machine d'usinage pour l'usinage des rainures ou nervures sur un palier axial à air ou à gaz du compresseur centrifuge selon l'invention.

### Description détaillée de l'invention

Dans la présente description, tous les composants faisant partie du compresseur centrifuge, qui sont bien connus de l'état de la technique, ne sont décrits que sommairement, car l'invention porte essentiellement sur la manière de réaliser des nervures ou des rainures sur deux portions d'un arbre pour être recouvertes respectivement par deux paliers radiaux statiques à air ou à gaz, ou sur un palier axial à air ou à gaz.

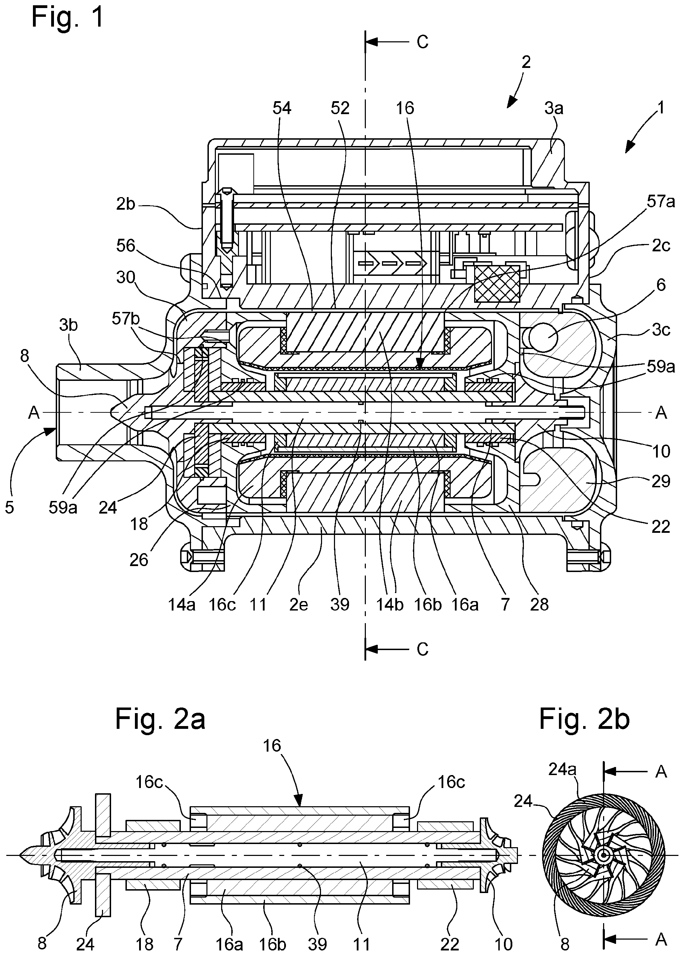

La figure 1 représente une coupe selon l'axe longitudinal A-A d'un convertisseur centrifuge 1 à haute vitesse. Le convertisseur centrifuge comprend dans un carter 2, un arbre 7 en carbure de tungstène ou en céramique, monté en rotation autour d'un axe longitudinal A-A traversant les faces avant 2b et arrière 2c, une première roue de compression centrifuge 8 et une seconde roue de compression centrifuge 10 montées dos à dos à chaque extrémité de l'arbre 7, ladite première roue de compression 8 constituant un premier étage de compression et ladite seconde roue de compression 10 constituant un second étage de compression. Plus particulièrement, l'arbre 7 est creux dans cette forme d'exécution et renferme une tige filetée 11, à chaque extrémité de laquelle est vissée l'une des roues de compression 8, 10, ce qui permet un montage et un démontage aisés des roues de compression. Ainsi, les deux roues de compressions 8 et 10 sont entrainées sur le même arbre 7, ce qui permet d'avoir un meilleur rendement énergétique et d'éviter un réducteur. L'arrière des roues de compression 8 et 10 comporte un joint labyrinthe afin de maitriser les pressions dans le compresseur et équilibrer les forces axiales.

Le carter 2 renferme également un moteur électrique de préférence synchrone positionné entre la première roue de compression 8 et la seconde roue de compression 10 et agencé pour mettre en rotation l'arbre 7. Le moteur comprend un stator 14 et une structure rotor 16 qui interagissent pour former un moteur électrique synchrone à au moins un aimant permanent 16a (moteur brushless). Plus particulièrement, le stator 14 est formé par une bobine 14a et deux éléments en ferrite 14b, montés fixes par rapport au carter 2. La structure rotor 16 comprend un ou plusieurs aimants permanents 16a rendus solidaire de l'arbre 7, par exemple par collage, et est recouvert d'un chemisage 16b. Des flasques 16c sont fixées (par exemple par collage) aux extrémités latérales du chemisage et permettent d'assurer la résistance de l'aimant aux forces centrifuges lors de grandes vitesses.

Il est à noter que la pièce destinée à être mise en rotation autour d'un axe longitudinal A-A d'un compresseur centrifuge, comprend au moins un arbre 7, sur lequel ou dans lequel est montée ou fixée une structure rotor 16 à au moins un aimant permanent 16a d'un moteur électrique pour entraîner l'arbre en rotation selon l'axe longitudinal A-A, et un palier axial à air ou à gaz 24 fixé à une extrémité de l'arbre 7 ou faisant partie de l'arbre 7. La pièce peut comprendre encore une première roue de compression 8 et une seconde roue de compression 10 montées à deux extrémités de l'arbre 7, un palier radial avant 18 à air ou à gaz monté sur une première extrémité de l'arbre 7, et un palier radial arrière 22 à air ou à gaz monté sur une seconde extrémité de l'arbre 7, comme représenté à la figure 2a.

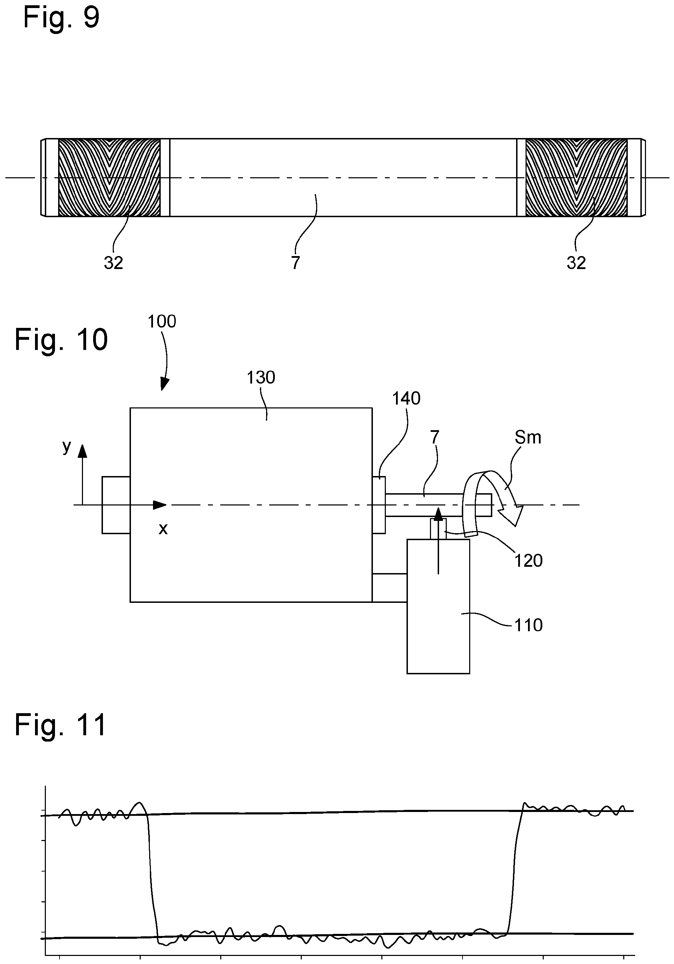

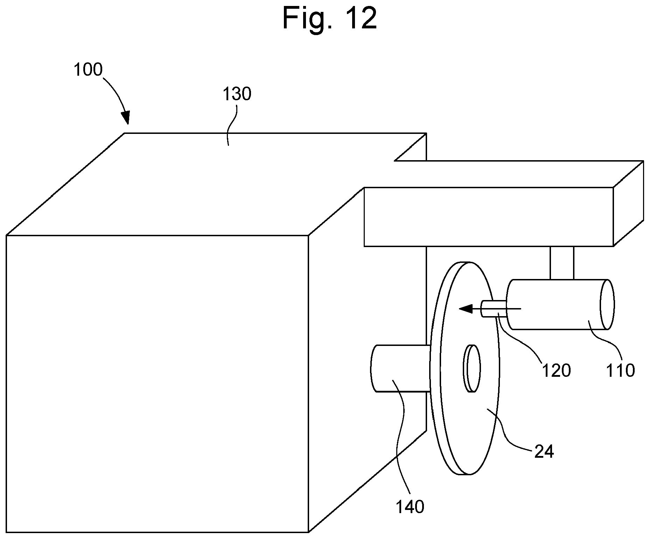

Comme décrit ci-après en référence aux figures 10 et 12, le procédé d'usinage est effectué dans une machine d'usinage 100 adaptée pour recevoir la pièce à usiner et notamment l'arbre 7 avec le palier axial 24 et comprend un porte-outil 110 avec un outil d'usinage des nervures ou rainures sur au moins une portion de l'arbre 7 de la pièce.

L'arbre 7 est monté en rotation dans le carter 2 autour de son axe longitudinal A-A au moyen d'au moins un palier radial avant 18, un palier radial arrière 22 et un palier axial 24. Le compresseur centrifuge 1 comprend un support de palier radial avant 26 pour porter le palier radial avant 18, un support de palier radial arrière 28 pour porter le palier radial arrière 22, agencés pour se positionner autour de l'arbre 7, respectivement à l'avant et à l'arrière du moteur. A l'arrière, il est également prévu une volute 29 entre le support de palier radial arrière 28 et le couvercle arrière 3c. La volute 29 comprend l'orifice menant à la sortie tangentielle 6 de fluide, après compression. Il est également prévu un support de palier axial 30 pour porter le palier axial 24 agencé pour se positionner autour de l'arbre 7, entre la première roue de compression 8 et le support de palier radial avant 26. Il est bien évident que le palier axial pourrait être prévu à l'arrière du moteur.

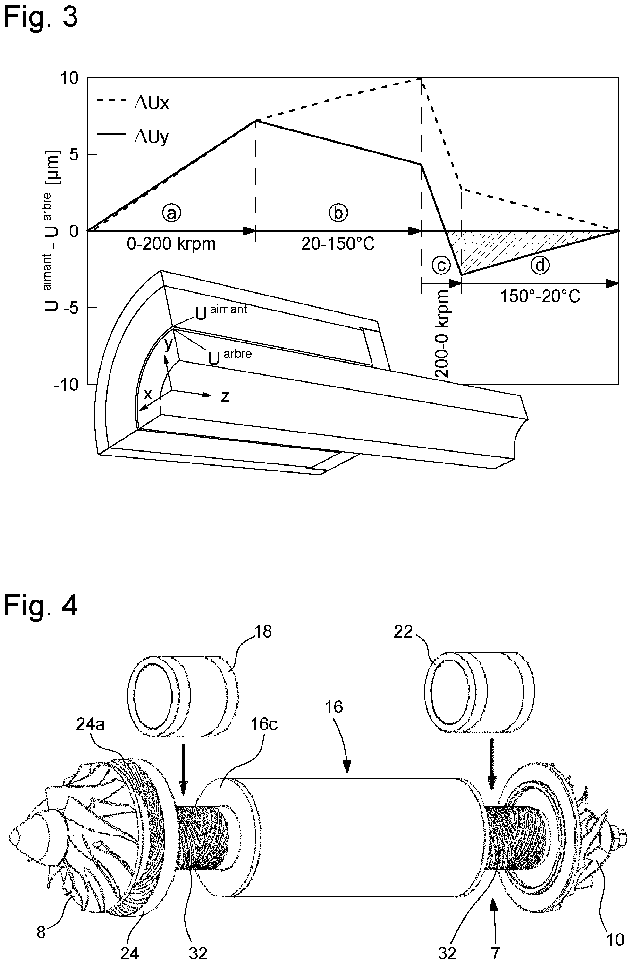

Les paliers sont sans contact, de type aérodynamiques, afin d'engendrer peu de frottement. Ils ne nécessitent pas de lubrification et demandent très peu de maintenance. Plus particulièrement, en référence aux figures 2a, 2b et 4, le palier axial 24 est un palier aérodynamique et est constitué par un disque comportant sur au moins l'une de ses faces des premières rainures 24a, de préférence en spirale sur une zone annulaire en périphérie, agencées pour créer un film d'air. De préférence, le palier axial 24 comprend des rainures ou nervures 24a de préférence en spirale en périphérie du disque de palier axial 24 sur une face avant et sur une face arrière obtenues par un procédé d'usinage expliqué ci-après. L'orientation des rainures ou nervures 24a peut être différente sur la face avant par rapport à la face arrière ou éventuellement identique. Le palier axial 24 avec ses rainures ou nervures 24a permet de garder l'arbre 7 en rotation de manière centrée longitudinalement par la génération de films d'air de la face avant et de la face arrière. Les paliers radiaux avant 18 et arrière 22 sont des paliers aérodynamiques, et l'arbre 7 présente en regard des paliers radiaux avant 18 et arrière 22 des secondes rainures ou nervures 32 agencées pour créer un film d'air ou de gaz lorsque l'arbre est mis en rotation dans les paliers radiaux à air ou à gaz.

Aux figures 2a, 2b et 4, on peut remarquer encore la première roue de compression centrifuge 8 et la seconde roue de compression centrifuge 10 montées dos à dos à chaque extrémité de l'arbre 7. Aux deux extrémités de l'arbre 7 sont une première portion de nervures ou rainures 32 usinées et à l'autre extrémité une seconde portion de rainures ou nervures 32 usinées. La structure rotor 16 à au moins un aimant permanent 16a est fixée sur l'arbre dans une position centrale pour le moteur électrique.

Il est aussi envisageable d'avoir une structure rotor 16, qui comprend un ou plusieurs aimants permanents magnétisés diamétralement 16a collés, frettés à l'intérieur de l'arbre 7 ou disposés dans un chemisage 16b. Le ou les aimants permanents 16a peuvent être frettés dans le chemisage 16b avec la plus grande rigidité et interférence possible pour mettre chaque aimant en compression afin de compenser la traction orthoradiale due aux forces centrifuges.

Il est encore à noter que le jeu entre l'arbre 7 et l'aimant 16a ou les aimants 16a montés à l'extérieur de l'arbre 7 doit être suffisant pour qu'il n'y ait pas de serrage de l'aimant 16a sur l'arbre 7 à haute vitesse et à haute température, ce qui mettrait l'intérieur de l'aimant 16a en état de traction bi-axiale élevée et augmenterait ainsi son risque de rupture. En effet, le déplacement radial de la surface intérieure de chaque aimant 16a peut être inférieur au déplacement radial de la surface extérieure de l'arbre 7 en raison du coefficient de dilatation thermique négatif de l'aimant dans une direction radiale. Ceci est illustré par la zone hachurée de la figure 3 où la surface intérieure de l'aimant 16a se rapproche de la surface extérieure de l'arbre 7 en fin de décélération rapide de la structure rotor 16 lorsque celle-ci est encore chaude.

La figure 3 représente un graphique de la différence entre un déplacement radial de la surface extérieure de l'arbre 7 et celui de la surface intérieure de l'aimant permanent 16a ou des aimants permanents 16a selon l'invention, x correspond à la direction de magnétisation diamétrale de l'aimant et y correspond à la direction orthogonale suivant laquelle l'aimant se contracte radialement lors du chauffage. Dans le cas d'un montage par collage, cette différence correspond à la déformation radiale à accommoder élastiquement par la colle entre l'arbre 7 et l'aimant permanent 16a.

Un collage peut être réalisé entre l'arbre 7 et l'aimant 16a, si la colle supporte la déformation radiale (jusqu'à 10 µm vu à la Figure 3) en traction à haute température et haute vitesse. Le cas échéant, si la colle flue à température de fonctionnement (par exemple 150°C) ou si son module élastique diminue de plusieurs ordres de grandeur, celle-ci n'assure plus son rôle de reprise de charge et devient donc inutile.

Dans les figures 2a et 4, des flasques 16c sont fixées aux extrémités latérales du chemisage 16b afin de garantir l'intégrité mécanique de l'aimant 16a ou de plusieurs aimants 16a parallèlement côte à côte sur l'arbre 7 soumis aux forces centrifuges. Les flasques 16c peuvent être collées ou frettées entre l'arbre 7 et le chemisage 16b.

Un assemblage sans colle est obtenu en optimisant le frettage (choix des matériaux et des interférences) des flasques 16c sur l'arbre 7, des flasques 16c dans le chemisage 16b et du chemisage 16b sur l'aimant 16a. Le couple est ainsi transmis de l'aimant 16a ou de chaque aimant 16a à l'arbre 7 via les flasques 16c. Un assemblage sans colle garantit une meilleure rigidité qu'un assemblage par collage, notamment à haute vitesse et température où un assemblage par collage verrait la fréquence de son premier mode de flexion diminuer dangereusement vers la fréquence de rotation.

Le chemisage 16b ou enveloppe peut être idéalement réalisé en fibres de carbone et alternativement en alliage de titane ou de molybdène. Les flasques 16c sont idéalement en alliage de titane et alternativement en acier amagnétique. L'interférence diamétrale des flasques 16c dans le chemisage 16b est idéalement identique ou légèrement inférieure à celle du chemisage 16b sur l'aimant 16a ou les aimants 16a.

Il est encore à noter que si le chemisage 16b et les flasques 16c sont réalisées dans un même matériau, il est possible de combiner le chemisage 16b et au moins une des deux flasques 16c en une seule et même pièce notamment pour le montage de la structure à aimant permanent 16a sur un côté extérieur de l'arbre 7. Il est aussi possible de substituer une flasque 16c par un épaulement réalisé sur l'arbre 7 (portée de frettage pour la flasque, ainsi que le positionnement axial de l'aimant).

Comme expliqué ci-après notamment à la figure 10, si les rainures ou nervures obtenues par tournage de l'arbre peuvent être réalisées sur l'arbre à l'état nu, il est néanmoins préférable de les réaliser après le montage de l'ensemble constitué par le chemisage 16b, l'aimant permanent 16a et les flasques 16c sur l'arbre 7 pour garantir les meilleures tolérances géométriques des deux paliers aérodynamiques 18 et 22 montrés en coupe à la figure 2a.

Si les rainures ou nervures obtenues par ablation laser de l'arbre peuvent être réalisées avant ou après le montage de l'ensemble constitué par le chemisage 16b, l'aimant permanent 16a et les flasques 16c sur l'arbre 7, il est toutefois préférable de réaliser ces rainures ou nervures après le frettage du disque axial 24 sur l'arbre 7 si l'aimant 16a est à l'intérieur de l'arbre 7. Dans tous les cas, il est indispensable d'obtenir la géométrie finale des paliers (et éventuellement de l'ensemble avec le disque axial si assemblé avant finition) avant l'ablation laser.

Si l'aimant 16a peut être magnétisé avant son montage sur l'arbre 7, il est préférable de le magnétiser après montage, mesure et équilibrage de de la structure rotor 16 afin de faciliter ces étapes.

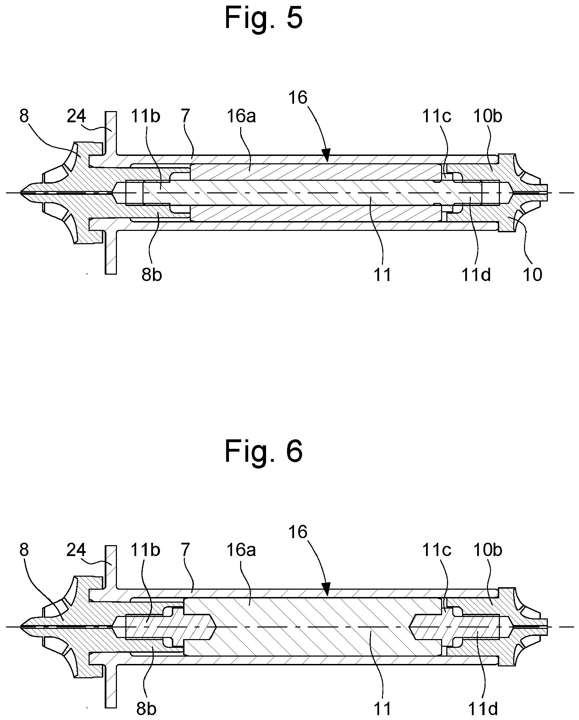

Une première variante est représentée en figure 5 avec une vue en coupe longitudinale selon l'axe A-A de l'arbre 7 avec les roues de compression 8 et 10, au moins le palier axial 24 monobloc avec l'arbre 7 et la structure rotor 16 à un ou plusieurs aimants permanents 16a selon l'invention disposée à l'intérieur de l'arbre 7, qui est sous forme tubulaire. Dans ce cas de figure, le ou les aimants permanents 16a sont frettés à l'intérieur de l'arbre 7 ou montés avec un faible jeu radial. Il est encore à noter que le jeu entre la tige 11 et l'aimant 16a ou les aimants 16a montés à l'intérieur de l'arbre 7 doit être suffisant pour qu'il n'y ait pas de serrage de l'aimant 16a sur la tige 11 à haute vitesse et à haute température, ce qui mettrait l'intérieur de l'aimant 16a en état de traction bi-axiale élevée et augmenterait ainsi son risque de rupture. La tige est filetée sur ses deux extrémités 11b et 11d pour pouvoir être vissée d'une part dans un taraudage intérieur 8b de la première roue de compression 8, et d'autre part dans un taraudage intérieur 10b de la seconde roue de compression 10. L'épaulement 11c est prévu dans le cas d'un jeu radial entre l'arbre 7 et l'aimant 16a afin de solidariser axialement l'aimant 16a et la tige filetée 11 après avoir vissé la roue de compression 8. Le serrage de la roue de compression 10 permet de solidariser axialement la tige filetée 11 et l'arbre 7.

Lorsque l'aimant 16a est à l'intérieur de l'arbre 7 et que le matériau de l'arbre 7 est trop fragile pour autoriser un frettage, l'aimant 16a est rendu solidaire de l'arbre 7 soit par collage, soit par serrage axial via une tige précontrainte en traction. Il est également possible d'obtenir un serrage axial sur un aimant plein en usinant des filetages dans l'arbre directement pour y visser les roues qui maintiendront l'aimant dans l'arbre 7 creux.

L'aimant creux est ainsi mis en légère compression axiale entre l'épaulement de la tige 11b et l'extrémité tubulaire 8b de la roue 8. Le serrage de la roue 8 permet de compenser la différence de dilatation thermique de la tige 11 et de l'aimant 16a. Le serrage de la roue 10 permet de compenser la différence de dilatation thermique de la tige 11 et de l'arbre 7 et de maintenir une adhérence suffisante pour transmettre le couple.

La figure 6 représente une seconde variante d'une vue en coupe longitudinale selon l'axe A-A de l'arbre 7 avec les roues de compression 8 et 10, au moins le palier axial 24 monobloc avec l'arbre 7 et la structure rotor 16 à un ou plusieurs aimants permanents 16a disposés à l'intérieur de l'arbre creux 7. Cette variante combine le collage et le serrage axial pour l'assemblage de l'aimant presque plein 16a à l'intérieur de l'arbre 7. Pour cela, des tiges 11b et 11d filetées à une seule extrémité et épaulés à l'autre extrémité sont collés sur leur partie lisse dans l'aimant presque plein 16a et vissées de l'autre côté dans les roues. De ce fait, l'aimant subit une traction axiale pour assurer une pré-charge des roues sur l'arbre 7 pour permettre la transmission du couple par adhérence.

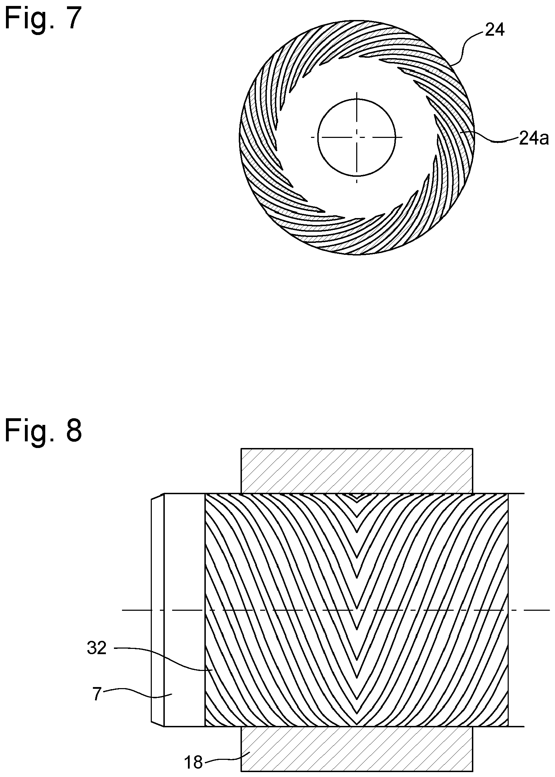

La figure 7 représente une forme d'exécution du palier axial 24 à air ou à gaz. Comme on peut le remarquer sur cette figure 7 en plan, il est réalisé des nervures ou des rainures 24a d'une certaine profondeur déterminée sur une zone annulaire partant de la périphérie du disque et en direction du centre du disque. Les nervures ou rainures 24a et leur agencement sont programmés notamment dans la machine d'usinage pour activer l'outil d'usinage afin de réaliser toutes les nervures ou les rainures en une fois, c'est-à-dire en déplaçant le porte-outil, ou le disque mis en rotation dans une seule direction d'usinage par exemple de la périphérie du disque au bas de la zone annulaire des nervures ou rainures. En partant par exemple de la périphérie du disque sur une des faces et progressivement des portions de rainures se forment par des mouvements de va-et-vient de l'outil d'usinage en synchronisme avec la machine d'usinage faisant tourner le disque à une vitesse déterminée selon une programmation sinusoïdale.

Avec cette programmation et en combinaison aux mouvements de va-et-vient contrôlés de l'outil d'usinage, chaque début de toutes les rainures 24a est réalisé par la rotation du disque et les mouvements de va-et-vient de l'outil d'usinage. Ceci se répète continuellement pour les portions de rainures ou nervures suivantes en continu de la première portion des rainures et ceci jusqu'au terme ou au bas de la zone annulaire. Avec une telle manière de réaliser les différentes nervures ou rainures 24a sur le disque 24, le temps d'usinage par face à rainures du disque est réalisé en moins d'une minute, ce qui se différencie notablement d'un usinage précédent effectué par faisceau laser.

La figure 8 représente une première portion de nervures ou rainures 32 réalisées sur une première extrémité de l'arbre 7 avec un premier palier radial à air ou à gaz 18 montré en coupe longitudinale sur la première portion de nervures ou rainures 32 réalisées par le procédé d'usinage.

Comme pour la réalisation des rainures ou nervures sur le disque axial décrit ci-dessus, lors de l'usinage de ces rainures ou nervures 32, l'arbre 7 est entraîné en rotation par la machine d'usinage autour de son axe longitudinal et déplacé selon son axe longitudinal dans une direction d'usinage. L'outil d'usinage disposé dans son porte-outil est déplacé en regard de la première portion de l'arbre à usiner en faisant des mouvements de va-et-vient à une fréquence dépendant de la programmation effectuée dans la machine d'usinage. Il est à noter qu'au lieu de déplacer l'arbre 7 dans une direction longitudinale, il est tout à fait concevable également de déplacer le porte-outil dans la direction longitudinale d'usinage. Toutes les nervures ou rainures 32 sont obtenues sur la première portion à usiner de la première extrémité de l'arbre entraînée en rotation, en une fois par l'outil d'usinage effectuant des mouvements de va-et-vient du début à la fin de la première portion à usiner de l'arbre 7.

La machine d'usinage est programmée pour avoir une synchronisation simultanée de tournage de l'arbre 7 avec l'outil d'usinage selon une programmation sinusoïdale pour obtenir un agencement déterminé des nervures ou rainures 32 sur la première portion à usiner de l'arbre 7 pour le palier radial avant à air ou à gaz 18. En partant par exemple du début de la première portion à usiner de l'arbre 7 du côté de sa première extrémité et dans une seule direction d'usinage et jusqu'à la fin de la première portion de la première extrémité de l'arbre 7, toutes les nervures ou rainures 32 sont toutes usinées en une fois, ce qui fait gagner beaucoup de temps d'usinage.

L'agencement déterminé des nervures ou rainures 32 réalisées sur la première portion de la première extrémité de l'arbre 7 est programmé dans la machine d'usinage. Dans une forme d'exécution désiré, les nervures ou les rainures 32 ont chacune une forme de V, c'est-à-dire avec un changement d'orientation en principe depuis le milieu de la première portion de l'arbre 7 à usiner. Cela permet de maintenir sans contact mécanique l'arbre mis en rotation à haute vitesse dans le compresseur dans les paliers radiaux à air ou à gaz. Déjà à partir de 6000 tours/min, la pression d'air ou de gaz dans chaque palier radial aérodynamique est telle que l'arbre n'est plus en contact mécanique avec le palier radial statique évitant de ce fait tout frottement mécanique.

La figure 9 représente l'arbre 7 avec une première portion à nervures ou rainures 32 usinées sur la première extrémité de l'arbre et une seconde portion sur la seconde extrémité de l'arbre 7. La première portion et la seconde portion sont usinées de la même manière que ce qui a été décrit ci-dessus en rapport à la figure 6. Le même agencement de nervures ou rainures 32 en forme de V aux deux extrémités de l'arbre 7 peut être prévu.

En guise de complément dans la figure 1, le compresseur 1 comprend un carter 2, en aluminium, dont la face supérieure 2a est fermée par un couvercle supérieur 3a et les faces avant 2b et arrière 2c sont fermées respectivement par un couvercle avant 3b et par un couvercle arrière 3c. Les faces latérales 2d du carter sont réunies à leur base pour former un fond 2e présentant, en section transversale, une forme en U.

Le couvercle supérieur 3a est positionné du côté des composants électroniques du compresseur. Ainsi, l'accès aux composants électroniques intégrés dans le compresseur, est facile, l'accès se faisant par le couvercle supérieur 3a. Les couvercles avant et arrière 3b, 3c servent à atteindre l'intérieur du compresseur (moteur, rotor, paliers, etc.). Un joint d'étanchéité est intercalé entre la face supérieure du carter 2 et le couvercle supérieur 3a. Ce joint permet de protéger les composants électroniques contre la poussière et l'humidité.

Le carter 2 présente une entrée de fluide à comprimer 5 prévue sur le couvercle avant 3b et une sortie tangentielle de fluide comprimé 6 prévue sur l'une des faces latérales du carter 2.

A la figure 1, le carter 2 comprend un logement intérieur traversant s'étendant coaxialement à l'axe longitudinal A-A entre la face avant 2b et la face arrière 2c du carter 2 et recevant le support de palier radial avant 26 et le palier radial avant 18, le moteur et sa structure rotor 16 fixée sur l'arbre 7, le support de palier radial arrière 28 et le palier radial arrière 22, la seconde roue de compression 10 et la volute 29. Du côté de la face avant 2b, le logement intérieur est fermé par le couvercle avant 3b qui intègre la première roue de compression 8, le support de palier axial 30 et le palier axial 24. Du côté de la face arrière 2c, le logement intérieur est fermé par le couvercle arrière 3c.

En outre, il est prévu avantageusement au moins un orifice par exemple le point référencé 57a agencé pour permettre au fluide à comprimer circulant dans les canaux d'entrer dans le moteur et de circuler entre le stator 14 et la structure rotor 16 et au moins un orifice par exemple les points référencés 57b agencé pour permettre au fluide à comprimer de sortir du moteur et de rejoindre lesdits canaux après avoir refroidi le moteur.

De même, il est prévu avantageusement au moins un orifice par exemple les points référencés 59a sur la figure 1 agencé pour permettre au fluide à comprimer circulant dans les canaux 54 de circuler à proximité des paliers axial 24, radial avant 18 et radial arrière 22, et au moins un orifice correspondant par exemple aux mêmes points référencés 57b agencé pour permettre au fluide à comprimer de rejoindre lesdits canaux 54 après avoir refroidi lesdits paliers axial 24, radial avant 18 et radial arrière 22.

Ainsi, après être entré dans le premier étage de compression par l'entrée 5, le fluide à comprimer passe dans les canaux 54 à travers les pièces du compresseur situées le long de l'axe longitudinal entre le premier étage de compression et le deuxième étage de compression pour rejoindre le second étage de compression. De ce fait, le fluide à comprimer, lorsqu'il passe entre la paroi intérieure 52 et les éléments en ferrite 14b du moteur, refroidit ce dernier et récupère les calories perdues du moteur afin d'augmenter son efficacité avant d'entrer dans le second étage de compression. De plus, les orifices 57a, 57b, 59a permettent de réaliser une légère déviation du flux afin que le fluide à comprimer circule également entre le stator 14 et la structure rotor 16 et dans les paliers pour refroidir ces éléments et récupérer les pertes de chaleur au niveau du moteur et les pertes de chaleur dues aux frottements dans les paliers.

Le compresseur centrifuge 1 permet d'atteindre des vitesses de rotation très élevées, comprises entre 100 000 tr/min et 500 000 tr/min. Il permet au fluide comprimé dans le premier étage de compression de passer sensiblement dans tout le système pour récupérer toute la chaleur perdue, et notamment la chaleur perdue au niveau du moteur, des paliers et des composants électroniques, afin d'augmenter son efficacité avant d'entrer dans le second étage de compression (la température du fluide à comprimer augmentant, sa pression augmente également). En outre, l'utilisation du seul fluide à comprimer pour refroidir le compresseur, sans l'aide d'un circuit de refroidissement additionnel, ainsi que l'agencement des composants électroniques dans le compresseur pour avoir une électronique intégrée au carter, permettent d'obtenir un compresseur très compact. Le compresseur selon l'invention présente donc un haut régime de rotation et un grand rapport de compression tout en occupant un volume restreint. Par exemple, un compresseur selon l'invention présente un rapport de compression supérieur à 3, et une puissance de l'ordre de 4 kW pour des dimensions L × l × h en cm de l'ordre de 14 x 8 x 11 pour un poids de 1,6 kg seulement.

Par exemple le compresseur selon l'invention peut être utilisé avec de l'air ou du gaz pour l'alimentation de piles à combustible, ou tout autre système qui utilise de l'air comprimé (compresseurs industriels, compresseurs médicaux, de bateaux, etc.).

Avec un gaz frigorigène, le compresseur selon l'invention peut être utilisé dans un système CVCA (chauffage, ventilation, climatisation et conditionnement d'air) mobile, comme dans les véhicules électriques, hybrides ou à hydrogène.

Le compresseur centrifuge peut aussi être utilisé dans un système immobile avec un gaz frigorigène, comme une pompe à chaleur.

Le compresseur centrifuge peut aussi être utilisé avec un gaz naturel.

La figure 10 représente un ensemble de la machine d'usinage 100 pour la réalisation de nervures ou rainures sur des portions de la première extrémité et la seconde extrémité de l'arbre 7.

La machine d'usinage 100 comprend un tour d'usinage 130 avec une broche 140 pour maintenir l'arbre 7 et le faire tourner lors de l'usinage des nervures ou rainures. Selon une variante de réalisation, la broche qui maintient l'arbre en rotation peut se déplacer dans une direction longitudinale d'usinage pour la réalisation des nervures ou rainures comme montré par la flèche Sm.

La machine d'usinage 100 comprend encore un porte-outil 110 relié à la structure du tour d'usinage 130. Le porte-outil 110 porte un outil d'usinage 120 dont la tête d'usinage qui vient en contact de l'arbre pour usiner les rainures ou nervures peut effectuer des mouvements de va-et-vient selon une programmation de la machine d'usinage. La tête d'outil d'usinage 120 peut être en diamant pour usiner les nervures ou rainures sur l'arbre 7 en carbure de tungstène ou en céramique. Ceci est effectué pour avoir une synchronisation simultanée de tournage de l'arbre 7 avec l'outil d'usinage selon une programmation sinusoïdale pour obtenir un agencement déterminé des nervures ou rainures sur les portions à usiner de l'arbre 7 pour chaque palier radial avant ou arrière à air ou à gaz.

Le porte-outil 110 peut aussi dans une variante de réalisation être déplacé dans une direction longitudinale d'usinage à la place de l'arbre 7 pour l'usinage des nervures ou rainures sur l'arbre.

Il peut encore être prévu de modifier la fréquence des mouvements de va-et-vient de l'outil selon programmation effectuée dans la machine d'usinage 100.

La figure 11 représente une nervure ou rainure de précision pour les paliers à air ou à gaz obtenu par les mouvements de va-et-vient de l'outil d'usinage bien déterminé en fonction du matériau à usiner la vitesse de rotation de l'arbre pour l'usinage, du diamètre de l'arbre et bien d'autres paramètres.

Finalement la figure 12 représente une machine d'usinage 100 pour la réalisation des nervures ou rainures sur une ou deux faces du disque de palier axial à air ou à gaz 24. Cette machine d'usinage 100 comprend les mêmes éléments que ceux décrits en référence à la figure 10 et ne seront pas répétés en référence à cette figure 12. Il y a juste la manière de relier le porte outil 110 à la structure du tour d'usinage 130.

Bien entendu, la présente invention ne se limite pas aux exemples illustrés et est susceptible de diverses variantes et modifications qui apparaîtront de manière évidente à l'homme du métier. D'autres combinaisons sont bien entendues possibles avec déjà ce qui est connu avec le compresseur centrifuge. L'usinage rapide et précis de nervures ou rainures peut être effectué sur d'autres pièces que celles décrites ci-dessus avec des éléments d'usinage équivalents.

## Revendications

1. Procédé d'usinage de nervures ou rainures sur une pièce destinée à être mise en rotation autour d'un axe longitudinal (A-A) d'un compresseur centrifuge (1), la pièce comprenant un arbre (7), sur lequel ou dans lequel est montée ou fixée une structure rotor (16) à au moins un aimant permanent (16a) d'un moteur électrique pour entraîner l'arbre en rotation, et/ou un palier axial à air ou à gaz (24) fixé à une extrémité de l'arbre (7) ou faisant partie de l'arbre (7), le compresseur centrifuge (1) comprenant encore un carter (2) présentant une entrée de fluide (5) et une sortie (6) de fluide comprimé, une première roue de compression (8) de la pièce et une seconde roue de compression (10) de la pièce montées à deux extrémités de l'arbre (7) dans le carter (2), un palier radial avant (18) à air ou à gaz monté sur une première extrémité de l'arbre (7), et un palier radial arrière (22) à air ou à gaz monté sur une seconde extrémité de l'arbre (7), le procédé d'usinage étant effectué dans une machine d'usinage (100) adaptée pour recevoir la pièce à usiner et comprenant un porte-outil (110) avec un outil d'usinage des nervures ou rainures sur au moins une portion de la pièce,
le procédé étant **caractérisé en ce que** toutes les nervures ou rainures (24a; 32) sont obtenues sur une portion à usiner de l'arbre (7) de la pièce entraînée en rotation, par déplacement de l'arbre (7) de la pièce ou du porte-outil (110) dans une direction longitudinale d'usinage, en une fois par l'outil d'usinage effectuant des mouvements de va-et-vient avec une position d'usinage en contact avec la pièce et une position sans contact avec la pièce du début à la fin de la portion à usiner de la pièce, **en ce que** les mouvements de va-et-vient de l'outil d'usinage sont synchronisés à la programmation sinusoïdale effectuée dans la machine d'usinage, ainsi qu'à l'agencement désiré et programmé des nervures ou rainures à réaliser sur la portion de la pièce, **en ce que** toutes des nervures ou rainures (32) sont obtenues sur une première portion à usiner de la première extrémité de l'arbre (7) depuis le début de la première portion à la fin de la première portion en une fois par des mouvements de va-et-vient de l'outil d'usinage et déplacement dans une direction longitudinale d'usinage de l'arbre (7) en rotation selon la programmation de la machine d'usinage (100), et **en ce que** toutes des nervures ou rainures (32) sont obtenues sur une seconde portion à usiner de la seconde extrémité de l'arbre (7) depuis le début de la seconde portion à la fin de la seconde portion en une fois par des mouvements de va-et-vient de l'outil d'usinage et déplacement dans une direction longitudinale d'usinage de l'arbre (7) en rotation ou du porte-outil (110).

2. Procédé d'usinage selon la revendication 1, pour lequel la pièce à usiner est l'arbre (7), qui est en carbure de tungstène ou en céramique, et pour lequel la tête de l'outil d'usinage (120) est en diamant pour réaliser les nervures ou rainures sur la première portion et la seconde portion usinées de l'arbre (7) en rotation.

3. Procédé d'usinage selon la revendication 2, **caractérisé en ce que** lors de l'usinage des nervures ou rainures (32), un changement d'orientation des nervures ou rainures (32) intervient au passage de la moitié de la première portion à usiner de la première extrémité de l'arbre (7) selon une programmation de la machine d'usinage de manière à obtenir des rainures en forme de V sur la longueur de la première portion usinée dans le but de générer une pression d'air ou de gaz dans le palier radial avant (18) disposé sur la première portion lors du fonctionnement du compresseur avec la rotation de l'arbre (7) au-dessus d'une vitesse limite pour ne plus avoir de contact mécanique avec le palier radial avant (18).

4. Procédé d'usinage selon la revendication 2, **caractérisé en ce que** lors de l'usinage des nervures ou rainures (32), un changement d'orientation des nervures ou rainures (32) intervient au passage de la moitié de la seconde portion à usiner de la seconde extrémité de l'arbre (7) selon une programmation de la machine d'usinage (100) de manière à obtenir des rainures en forme de V sur la longueur de la seconde portion usinée dans le but de générer une pression d'air ou de gaz dans le palier radial arrière (22) disposé sur la seconde portion lors du fonctionnement du compresseur (1) avec la rotation de l'arbre (7) au-dessus d'une vitesse limite pour ne plus avoir de contact mécanique avec le palier radial arrière (22).

5. Procédé d'usinage selon la revendication 1, pour lequel la pièce à usiner est le palier axial à air ou à gaz (24) sous la forme d'un disque, **caractérisé en ce que** les nervures ou rainures (24a) et leur agencement sont programmés dans la machine d'usinage (100) pour activer l'outil d'usinage (120) afin de réaliser toutes les nervures ou les rainures en une fois sur une première face du disque en déplaçant l'outil d'usinage, ou le disque mis en rotation dans une seule direction d'usinage de la périphérie du disque au bas de la zone annulaire des nervures ou rainures ou inversement, et par des mouvements de va-et-vient de l'outil d'usinage (120) selon la programmation de la machine d'usinage (100).

6. Procédé d'usinage selon la revendication 5, **caractérisé en ce que** toutes les nervures ou les rainures (24a) sont réalisées en une fois sur une seconde face du disque en déplaçant l'outil d'usinage, ou le disque mis en rotation dans une seule direction d'usinage de la périphérie du disque au bas de la zone annulaire des nervures ou rainures (24a) ou inversement, et par des mouvements de va-et-vient de l'outil d'usinage (120) selon la programmation de la machine d'usinage (100).

7. Procédé d'usinage selon la revendication 6, **caractérisé en ce que** toutes les nervures ou les rainures (24a) sont réalisées sous forme de spirale selon une même orientation sur les deux faces ou deux orientations différentes dans le but de générer des films d'air par les rainures à la rotation de l'arbre pour maintenir l'axe dans une position bien centrée longitudinalement lors du fonctionnement du compresseur centrifuge (1).

8. Procédé d'usinage selon la revendication 7, **caractérisé en ce que** l'usinage de toutes les nervures ou les rainures (24a) sur une face ou les deux faces du disque sont réalisées avant ou après l'usinage des nervures ou rainures sur la première portion et/ou la seconde portion de l'arbre (7).

9. Procédé d'usinage des nervures ou rainures sur une pièce (7, 24) selon la revendication 1, et d'assemblage des composants de la pièce, lesdits composants étant l'arbre (7) sur lequel est fixé le palier axial à air ou à gaz (24) sous forme de disque fixé à une extrémité de l'arbre (7), et sur lequel ou dans lequel la structure rotor (16) à au moins un aimant permanent (16a) d'un moteur électrique est disposée ou fixée entre les première et seconde portions de l'arbre (7), **caractérisé en ce que** l'usinage de toutes les nervures ou les rainures (24a) sur une face ou les deux faces du disque sont réalisées après l'usinage des nervures ou rainures sur la première portion et/ou la seconde portion de l'arbre (7) et avant le placement ou fixation de la structure rotor (16) à au moins un aimant permanent (16a) sur ou dans l'arbre entre la première portion et la seconde portion, qui sont usinées de l'arbre (7).

10. Procédé des nervures ou rainures sur une pièce (7, 24) selon la revendication 1, et d'assemblage des composants de la pièce, lesdits composants étant l'arbre (7) sur lequel est fixé le palier axial à air ou à gaz (24) sous forme de disque fixé à une extrémité de l'arbre (7), et sur lequel ou dans lequel la structure rotor (16) à au moins un aimant permanent (16a) d'un moteur électrique est disposée ou fixée entre les première et seconde portions de l'arbre (7), **caractérisé en ce que** la structure rotor (16) à au moins un aimant permanent (16a) d'un moteur électrique est disposée ou fixée entre les première et seconde portions de l'arbre (7) avant l'usinage des nervures ou rainures de la première portion et de la seconde portion de l'arbre (7), et **en ce que** l'usinage de toutes les nervures ou les rainures (24a) sur une face ou les deux faces du disque sont réalisées après l'usinage des nervures ou rainures sur la première portion et/ou la seconde portion de l'arbre (7).

11. Pièce destinée à être mise en rotation autour d'un axe longitudinal (A-A) d'un compresseur centrifuge (1) et destinée à avoir des nervures ou des rainures usinées selon le procédé d'usinage selon l'une des revendications 1 à 8, **caractérisée en ce que** la pièce comprend au moins un arbre (7), sur lequel ou dans lequel est montée ou fixée une structure rotor (16) à au moins un aimant permanent (16a) d'un moteur électrique pour entraîner l'arbre en rotation, et/ou un palier axial à air ou à gaz (24) fixé à une extrémité de l'arbre (7) ou faisant partie de l'arbre (7).

12. Pièce selon la revendication 11, **caractérisée en ce que** la structure rotor (16) à aimant permanent est disposée sur une surface extérieure de l'arbre entre la première portion et la seconde portion usinées en nervures ou en rainures de l'arbre (7).

13. Pièce selon la revendication 12, **caractérisée en ce que** la structure rotor (16) comprend un ou plusieurs aimants permanents (16a) rendus solidaire de l'arbre 7 en étant recouvert d'un chemisage (16b), et **en ce que** deux flasques (16c) ou une flasque (16c) et un épaulement sur l'arbre (7) sont fixés ou placés aux extrémités latérales du chemisage (16b) pour permettre d'assurer la résistance du rotor (16) aux forces centrifuges lors de grandes vitesses.

14. Pièce selon la revendication 13, **caractérisée en ce que** les flasques (16c) sont collées ou frettées entre l'arbre (7) et le chemisage (16b).

15. Pièce selon la revendication 11, **caractérisée en ce que** la structure rotor (16) à aimant permanent est disposée à l'intérieur de l'arbre (7) sous forme tubulaire, **en ce que** le ou les aimants permanents (16a) sont frettés à l'intérieur de l'arbre (7) et disposés sur une tige (11) ou fixés à deux tiges d'extrémité (11b, 11d).
